# FASCICULE DE BREVET EUROPEEN

(11) **EP 0 406 092 B1**
(45) Date de publication et mention de la délivrance du brevet: **13.01.1993**
(21) Numéro de dépôt: 90401807.4
(22) Date de dépôt: 25.06.1990
(51) Int. Cl.: B67C 3/20, B65B 3/28, G01G 13/285

(54) **Dispositif de remplissage de récipients à dosage pondéral**
Vorrichtung zum Füllen von Behältern mit abgewogenen Mengen
Device for filling containers with weighted measures

(30) Priorité: 27.06.1989 FR 8908529; 25.01.1990 FR 9000852
(43) Date de publication de la demande: 02.01.1991
(73) Titulaire: S.E.R.A.C. GROUP, F-72402 LA FERTE-BERNARD (FR)
(72) Inventeur: S.E.R.A.C. GROUP, F-72402 LA FERTE-BERNARD (FR)
(74) Mandataire: Fruchard, Guy

(56) Documents cités:
- EP-A- 0 052 546
- EP-A- 0 221 367
- EP-A- 0 221 367
- DE-A- 3 523 502
- US-A- 2 925 835
- US-A- 3 786 844

## Description

La présente invention concerne un dispositif de remplissage de récipients à dosage pondéral.

On connaît des dispositifs de remplissage de récipients dans lesquels le produit à conditionner fait l'objet d'un dosage pondéral. On connaît en particulier des carrousels de remplissage de récipients dans lesquels un châssis rotatif supporte une trémie d'alimentation reliée à une série de becs de remplissage par l'intermédiaire de vannes de remplissage chacune reliée à une sortie d'une unité de commande pondérale ayant une entrée reliée à une balance embarquée sur le châssis rotatif et disposée en dessous d'un récipient lui-même positionné à l'aplomb d'un bec de remplissage. La balance sert à commander une ouverture ou une fermeture de la vanne de remplissage en fonction d'un poids mesuré par référence à une valeur de consigne introduite dans la balance. Le dosage pondéral présente l'avantage de dissocier l'appareil de mesure du produit à doser et de ne pas être sensible à la variation de température ou plus généralement de densité du produit.

Toutefois, pour des machines devant travailler à des cadences très élevées comme cela est maintenant couramment requis pour abaisser le coût de conditionnement des produits, on a constaté que dans les régimes transitoires la référence au poids seul engendrait des anomalies de fonctionnement liées à ces régimes transitoires. Parmi ces anomalies, on peut citer notamment les problèmes de formation de mousse au début du remplissage d'un récipient ; les débordements en fin de remplissage d'un récipient principalement lors de la mise en route ou de l'arrêt d'une installation par suite des variations de pression dans les conduites d'alimentation résultant de la mise en service d'un nombre variable de becs de remplissage ; les perturbations résultant des variations de viscosité du produit par suite de variations de la température de conditionnement. A ce propos, on remarquera que lorsque la viscosité du produit varie dans une proportion importante avec la température, le fonctionnement du dispositif de remplissage risque d'être fortement perturbé par des variations de température du produit à conditionner. On connaît du document EP 221.367 un dispositif de remplissage de récipients suivant le préambule de la revendication 1 comportant un organe de commande d'écoulement relié à une unité de traitement pondéral comportant un organe de mesure de temps associé à un organe de pesage pour mesurer un poids de produit s'écoulant pendant un temps déterminé. Cette mesure est utilisée pour déterminer l'ouverture de l'organe de commande d'écoulement dans les phases de remplissage qui suivent la phase où la mesure de poids est effectuée. Toutefois l'ouverture de l'organe de commande d'écoulement est constante pendant chaque phase de remplissage de sorte que si la mesure de poids de la phase initiale est faussée, les ouvertures des phases suivantes seront faussées de façon correspondante.

Un but de l'invention est de proposer un dispositif de remplissage de récipients à dosage pondéral qui compense au moins certaines des perturbations résultant de régimes transitoires.

En vue de la réalisation de ce but, on prévoit selon l'invention un dispositif de remplissage de récipients comportant un organe d'alimentation relié à au moins un bec de remplissage par l'intermédiaire d'un organe de commande d'écoulement relié à une sortie d'une unité de traitement pondéral ayant une entrée reliée à un organe de pesage afin d'envoyer des signaux d'ouverture ou de fermeture à l'organe de commande d'écoulement en fonction d'un poids mesuré par l'organe de pesage et un organe de mesure de temps associé à l'unité de traitement pondéral pour effectuer au moyen de celle-ci une mesure de poids de produit s'écoulant dans un temps prédéterminé caractérisé en ce que l'unité de traitement pondéral calcule le débit instantané de produit à travers l'organe de commande d'écoulement, compare le débit calculé à une valeur de référence de débit, et ajuste de façon continue le débit de produit en fonction du résultat de la comparaison pour maintenir celui-ci égal au débit de référence.

Ainsi, on effectue en parallèle une mesure de poids conventionnelle destinée à arrêter l'écoulement lorsque la masse désirée est atteinte, et également une régulation du débit, soit par la régulation de l'ouverture d'une vanne de régulation, soit par la régulation du débit au niveau du moyen d'alimentation de sorte que l'on minimise les perturbations liées à l'écoulement sans affecter la mesure de la masse introduite dans un récipient, et en améliorant même généralement cette mesure.

Selon une version avantageuse de l'invention, l'organe de commande d'écoulement comporte un élément de commande associé à chaque bec de remplissage et un élément de régulation commun à plusieurs becs de remplissage. Une telle disposition permet en particulier d'assurer une alimentation sensiblement constante de chaque bec de remplissage quelque soit le nombre de becs de remplissage en service, notamment dans les phases de démarrage et d'arrêt de l'installation.

Selon un aspect particulier de cette version de l'invention, l'élément de commande associé à chaque bec de remplissage comporte une ouverture de section variable et l'unité de traitement pondéral associée à chaque bec de remplissage effectue une comparaison individuelle avec une valeur de référence de débit pour chaque bec de remplissage, et le dispositif comporte un organe de gestion commun pour totaliser les débits calculés de plusieurs becs de remplissage et agir sur l'élément de régulation commun. Ainsi on alimente non seulement chaque bec dans des conditions relativement constantes mais on personnalise le débit de chaque bec en fonction de ses caractéristiques propres.

Selon un autre aspect avantageux de l'invention, la valeur de référence de débit de chaque bec de remplissage est variable en fonction d'un degré de remplissage du récipient correspondant. Ainsi on adapte le débit aux circonstances, par exemple un faible débit en début de remplissage pour éviter une formation de mousse, un fort débit dans une phase intermédiaire pour un remplissage rapide de la partie centrale du récipient et un débit plus faible en fin de remplissage pour améliorer la précision du dosage pondéral.

Selon encore un autre aspect avantageux de l'invention, l'organe de mesure de temps mesure un temps effectif de remplissage pendant lequel la vanne de remplissage est ouverte et le dispositif de remplissage comporte des moyens pour comparer le temps effectif de remplissage avec un temps de consigne, et des moyens pour agir en fonction d'une différence entre le temps effectif de remplissage et le temps de consigne afin de maintenir un débit de produit sensiblement constant à travers l'organe de commande d'écoulement. Ainsi on minimise les effets de variation de viscosité du produit à conditionner.

D'autres caractéristiques et avantages de l'invention apparaîtront à la lecture de la description qui suit de modes de réalisation particuliers non limitatifs de l'invention en liaison avec les dessins ci-joints parmi lesquels :
- la figure 1 illustre de façon schématique partielle un premier mode de réalisation de l'invention,
- la figure 2 illustre de façon schématique partielle un second mode de réalisation de l'invention,
- la figure 3 illustre de façon schématique partielle un troisième mode de réalisation de l'invention.

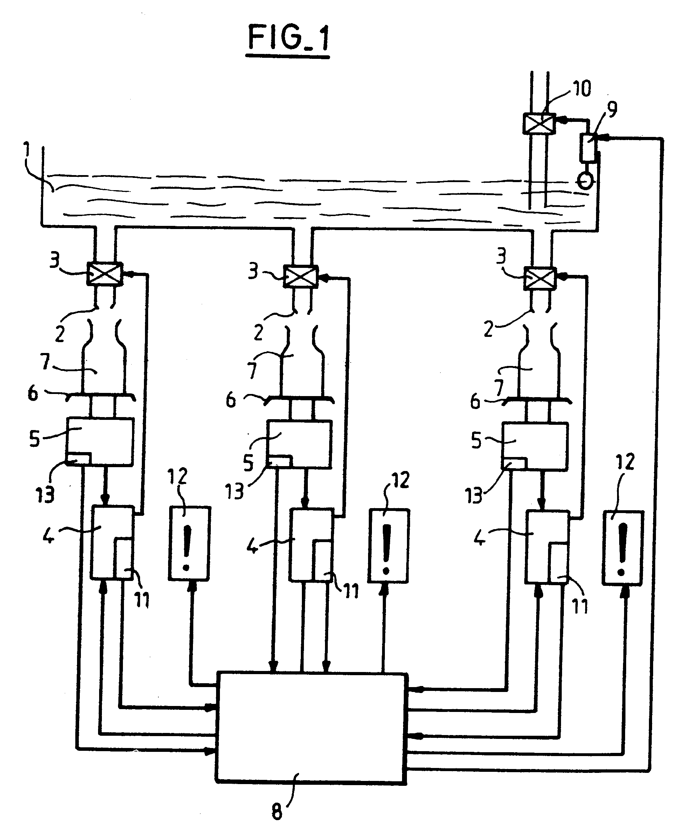

En référence à la figure 1, le dispositif de remplissage de récipients représenté comporte une trémie d'alimentation 1 reliée à trois becs de remplissage 2 par l'intermédiaire de trois organes de commande d'écoulement formés par des vannes 3 fonctionnant en tout ou rien et chacune reliée à une sortie d'une unité de traitement pondéral 4 ayant une entrée reliée à un organe de pesage 5, telle qu'une balance, disposée en dessous d'un bec de remplissage 2 et comportant un plateau de réception 6 sur lequel est disposé un récipient 7. L'unité de traitement pondéral 4 est prévue pour commander de façon habituelle l'ouverture ou la fermeture de la vanne de remplissage 3 en fonction d'un poids mesuré par la balance 5 et d'une valeur de consigne introduite dans l'unité de traitement pondéral lors de son installation ou envoyée à l'unité de traitement pondéral par une unité de gestion commune 8 à laquelle elle est reliée.

Le débit qui traverse une vanne de remplissage 3 lorsque celle-ci est ouverte est réglé par la hauteur du produit dans la trémie d'alimentation 1 au moyen d'un détecteur de niveau 9 agissant sur une vanne d'alimentation 10.

Dans les systèmes existants, le détecteur de niveau 9 reçoit une consigne de niveau constante de sorte que la pression au niveau des becs de remplissage 2 est constante quelle que soit la température du produit dans la trémie d'alimentation 1. Or il s'avère qu'un dispositif de remplissage peut être utilisé dans des conditions de température extrêmement variable. En particulier, une installation du conditionnement d'huile est couramment utilisée dans des conditions de température variant de 15°C environ jusqu'à 30°C environ . Dans ces conditions, la viscosité de l'huile varie également de façon très importante de sorte que l'on passe d'un produit très épais à un liquide presque aussi fluide que l'eau. Lorsque la hauteur de liquide dans la trémie d'alimentation est réglée de façon constante, le débit à travers les becs de remplissage 2 varie donc énormément avec la viscosité.

Pour éviter une variation du débit et des inconvénients qu'elle entraîne, qui ont été rappelés dans le préambule de la description, on prévoit avantageusement selon l'invention d'équiper chaque unité de traitement pondéral 4 d'une horloge 11 qui mesure le temps effectif de remplissage pendant lequel la vanne de remplissage associée est ouverte et envoie cette information à l'unité de gestion 8. Dans ce mode de réalisation, l'unité de gestion 8 effectue une moyenne entre les temps effectifs de remplissage des différentes lignes de remplissage et compare cette moyenne avec un temps de consigne introduit dans l'unité de gestion lors de son installation ou de sa mise en route en liaison avec le produit à conditionner considéré. Lorsque la moyenne du temps effectifs de remplissage n'est pas en coïncidence avec le temps de consigne, l'unité de gestion 8 envoie un signal modifiant la consigne du détecteur de niveau 9 afin d'adapter la hauteur du produit dans la trémie d'alimentation 1 de façon à maintenir le débit de produit à travers les vannes de remplissage à une valeur sensiblement constante.

A titre d'exemple, dans le cas d'une installation de conditionnement d'huile, lorsque la température ambiante s'élève, l'huile devient plus fluide et le temps de remplissage d'un récipient a tendance à diminuer. La hauteur de liquide dans la trémie d'alimentation 1 est alors diminuée pour rétablir le débit initial à travers les becs de remplissage.

La mesure d'un temps effectif de remplissage qui est effectuée selon l'invention en parallèle à la mesure d'un poids par l'unité de traitement pondéral, peut également être utilisée pour signaler à l'opérateur chargé de l'installation une anomalie de fonctionnement de l'un des becs de remplissage. En particulier, lorsqu'un bec de remplissage a tendance à s'encrasser, le temps effectif de remplissage associé à ce bec de remplissage devient anormalement élevé par rapport au temps de consigne. Selon l'invention, on prévoit d'introduire dans l'unité de gestion 8 un temps critique de remplissage qui ne doit normalement pas être atteint par le temps effectif de remplissage, ce temps critique de remplissage étant introduit dans l'unité de gestion lors de sa mise en route ou calculé à partir de la moyenne des temps effectifs de remplissage. Chaque fois qu'un temps effectif de remplissage est transmis par une horloge 11 d'une unité de traitement pondéral 4, celui-ci est comparé au temps critique de remplissage et si le temps critique de remplissage est atteint, l'unité de gestion 8 déclenche une alarme qui est affichée soit à une console centrale, soit sur un dispositif d'affichage 12 disposé à côté du bec de remplissage considéré. Selon le degré d'urgence du signal d'alarme, l'opérateur est informé qu'il aura à intervenir sur le bec de remplissage considéré lors du prochain arrêt de la machine ou bien qu'une mise hors service immédiate de ce bec de remplissage doit être effectuée.

Dans le cas où les organes de pesage 5 comportent des moyens d'auto-contrôle 13 pour détecter un organe de pesage défaillant, on prévoit avantageusement selon l'invention de relier l'unité de gestion 8 au moyen d'auto-contrôle 13 et, lorsque la défaillance d'un organe de pesage 5 est constatée, de court-circuiter l'unité de traitement pondéral 4 correspondante pour la remplacer par une commande temporisée effectuée en fonction de la moyenne des temps effectifs de remplissage correspondant aux autres becs de remplissage. Afin que la commande temporisée d'un bec de remplissage soit particulièrement adaptée à celui-ci, on prévoit de préférence de mémoriser dans l'organe de gestion 8 les temps effectifs de remplissage correspondant à chaque bec de remplissage et d'effectuer la commande temporisée d'un bec de remplissage dont l'organe de pesage est défaillant en fonction de la moyenne des temps effectifs de remplissage et d'au moins un temps effectif de remplissage correspondant au bec de remplissage considéré avant le passage en commande temporisée. Par exemple, s'il a été constaté que le bec de remplissage dont l'organe de pesage devient défaillant avait habituellemnt un temps effectif de remplissage supérieur à la moyenne, le remplissage temporisé sera effectué selon le même rapport relativement à la moyenne des temps effectifs calculée à chaque instant.

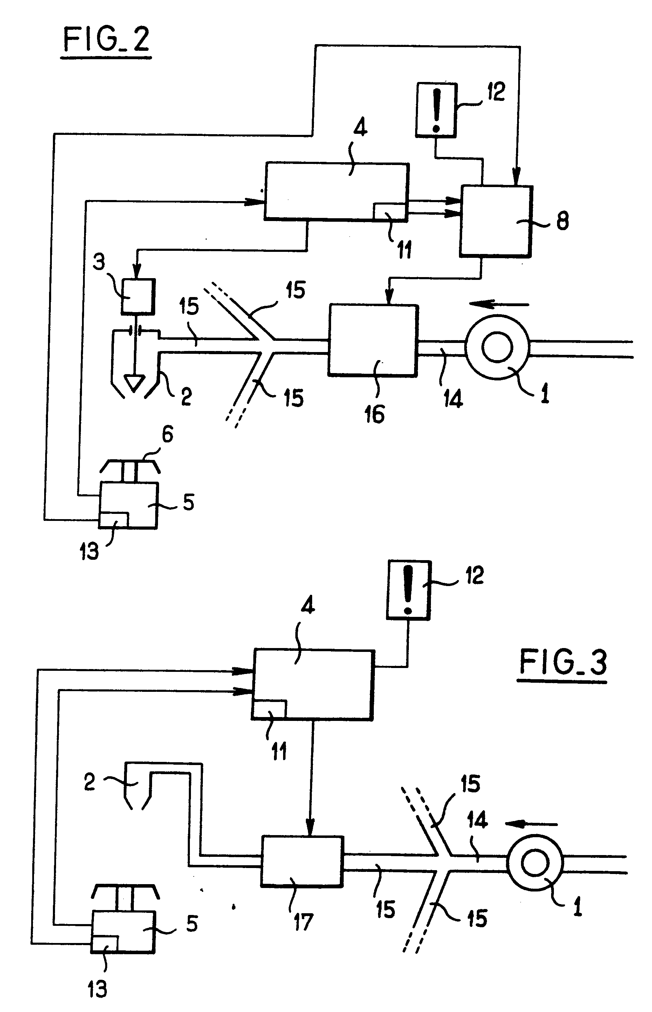

La figure 2 illustre de façon partielle schématique un autre mode de réalisation de l'invention plus particulièrement destiné à assurer une régulation de l'écoulement au niveau des becs de remplissage lors des phases de démarrage et d'arrêt de l'installation. Dans le mode de réalisation illustré, l'organe d'alimentation 1 est cette fois une pompe centrifuge disposée sur un tronçon de canalisation d'alimentation 14 commun à plusieurs becs de remplissage. Entre la pompe d'alimentation 1 et les becs de remplissage 2, dont un seul a été représenté pour simplifier le dessin, la canalisation d'alimentation commune 14 se subdivise en canalisations d'alimentation individuelles 15. Le dispositif de remplissage comporte de la même façon que précédemment un organe de pesage 5 associé à chaque bec de remplissage 2, cet organe de pesage étant relié à une unité de traitement pondéral 4 comportant un organe de mesure de temps 11. On comprendra aisément que lorsque la machine est mise en route, c'est-à-dire que les becs de remplissage sont successivement mis en service lors de l'introduction des premiers récipients sur l'installation, la pression d'alimentation exercée par la pompe d'alimentation 1 dans les canalisations individuelles est plus forte lorsqu'un seul bec de remplissage, ou un faible nombre de becs de remplissage, est en service que lorsque tous les becs de remplissage sont en service. D'une façon générale, les becs de remplissage sont réglés pour une pression dynamique d'alimentation correspondant à une mise en service de tous les becs de remplissage. Lors de la mise ne route de l'installation, la pression dynamique plus forte dans les canalisations d'alimentation 15 des premiers becs de remplissage mis en service provoque donc des perturbations, telle qu'une formation de mousse ou des éclaboussures. Selon l'invention on prévoit donc avantageusement dans ce cas de disposer, en plus de l'élément de commande formé par la vanne de remplissage 3 fonctionnant en tout ou rien, un élément de régulation formé par une vanne de régulation 16 disposée sur la canalisation d'alimentation 14 commune à plusieurs becs de remplissage.

Dans son application au maintien d'un débit constant pendant la phase de fonctionnement normal, l'organe de mesure de temps 11 sert comme précédemment à mesurer un temps effectif de remplissage et une unité de gestion commune 8 effectue comme précédemment une comparaison avec un temps de consigne et envoie, le cas échéant, un signal à la vanne de régulation 16 dans un sens d'ouverture ou de fermeture de celle-ci.

Dans son application à la mise en route de la machine, l'organe de mesure de temps 11, en liaison avec les signaux envoyés par l'organe de pesage 5, sert à calculer un débit instantané des becs de remplissage en service. L'unité de gestion commune 8 effectue alors une comparaison des débits instantanés relevés,ou de la moyenne de ces débits instantanés, avec une valeur de consigne de débits instantanés qui agit sur la vanne de régulation 16 en fonction de cette comparaison. Lors de la mise en route de la machine, la vanne 16 est réglée à une ouverture minimum assurant un débit suffisant pour le fonctionnement du premier bec de remplissage qui va être mis en service. Dès qu'un second bec de remplissage est mis en service, le débit a tendance à chuter au niveau des deux becs de remplissage en service. Cette baisse de débit instantané est détectée par l'unité de gestion commune 8 qui envoie un signal pour augmenter l'ouverture de la vanne de régulation 16. A chaque mise en service d'un nouveau bec de remplissage, le débit dans la canalisation commune 14 est donc adapté à la somme des débits nécessaires dans les canalisations individuelles 15.

De la même façon, lors de l'arrêt de la machine, les becs de remplissage sont progressivement arrêtés les uns après les autres et l'unité de gestion commune 8 sert alors à refermer progressivement la vanne de régulation 16 pour assurer un débit constant au niveau de chaque bec de remplissage.

On remarquera que la mesure du débit instantané peut être utilisée pour agir sur la vanne de régulation 16 non seulement pendant la phase de démarrage et d'arrêt de la machine, mais également pendant la phase de fonctionnement normal de la machine afin d'assurer une régulation du débit dans la canalisation principale 14 lors de perturbations pouvant intervenir, par exemple des variations de la viscosité du produit à conditionner. Toutefois, si le débit instantané est utilisé seul sans calculer le temps effectif de remplissage des récipients, il n'est plus possible de passer en mode temporisé en cas de défaillance d'un organe de pesage 5. Le dispositif selon l'invention est donc de préférence réalisé en prévoyant simultanément un calcul de débit instantané et un calcul de temps effectif de remplissage des récipients.

La figure 3 illustre un troisième mode de réalisation dans lequel le dispositif de remplissage comporte comme dans le cas de la figure 2 une pompe centrifuge 1 alimentant une canalisation commune 14. Immédiatement en aval de la pompe centrifuge 1, la canalisation commune 14 se subdivise en canalisations individuelles 15. Sur chacune d'elle est disposé un organe de commande d'écoulement à ouverture variable 17 pour alimenter un bec de remplissage 2 qui, dans ce mode de réalisation, ne comporte pas de clapet de fermeture. Le dispositif comporte par ailleurs une unité de traitement pondéral 4 comportant un organe de mesure de temps 11 et reliée en entrée à l'organe de pesage 5 et au moyen d'auto-contrôle 13, et en sortie à l'organe de commande d'écoulement 17 et à l'alarme 12.

Ce dispositif fonctionne soit à débit constant en mesurant un temps effectif de remplissage comme dans le cas du dispositif de la figure 1, soit en utilisant l'organe de mesure de temps 11 pour calculer un débit instantané et, le cas échéant, faire varier la valeur de référence de débit en fonction de paramètres choisis à l'avance. Par exemple, on a constaté qu'il était souvent souhaitable de commencer le remplissage d'un récipient à très faible débit pour éviter une formation de mousse lorsque le produit heurte le fonds du récipient jusqu'à ce qu'une quantité suffisante de produit ait été introduite pour former une couche mobile dans le fond du récipient. Une première valeur de référence de débit est donc introduite en mémoire de l'unité de traitement pondéral 4 avant la mise en route de la machine. La quantité de produit à introduire pour former la couche mobile correspond à un poids de produit à conditionner qui, lorsqu'il est détecté par l'organe de pesage 5, déclenche un changement de la valeur de référence de débit vers une seconde valeur de référence plus élevée que la première valeur de référence, et également en mémoire, pour permettre un remplissage rapide de la majeure partie du récipient jusqu'à ce que la masse de produit introduite dans le récipient atteigne un second seuil, par exemple 10% en dessous de la masse de produit à introduire. Lorsque ce second seuil est atteint, l'organe de pesage 5 déclenche un nouveau changement de valeur de référence de débit vers une valeur de référence plus faible permettant de terminer le remplissage à faible débit pour obtenir une bonne précision de l'arrêt définitif de remplissage. On remarquera que dans ce mode de réalisation les temps de chaque phase de remplissage peuvent être mémorisés et servir à un remplissage temporisé en cas de défaillance de l'organe de pesage détecté par les moyens d'auto-contrôle 13. Dans ce mode de réalisation on remarquera également que le bec de remplissage 2 est de préférence à une distance suffisante de l'organe de commande d'écoulement 17 pour permettre une stabilisation de l'écoulement dans la partie de canalisation en aval de l'organe de commande d'écoulement 17. Afin d'éviter une vidange de la partie de canalisation comprise entre l'organe de commande d'écoulement 17 et le bec de remplissage 2, ou même la formation de gouttes au niveau du bec de remplissage lors de la fermeture complète de l'organe de commande d'écoulement 17, l'ouverture inférieure du bec de remplissage est de préférence à un niveau plus élevé que l'organe de commande d'écoulement 17.

Bien entendu l'invention n'est pas limitée aux modes de réalisation décrits et on peut y apporter des variantes sans sortir du cadre de l'invention telle que définie dans les revendications. En particulier, on peut combiner l'utilisation d'un organe de commande d'écoulement à ouverture variable 17 avec une vanne de régulation disposée sur la canalisation commune 14 en amont de la division en canalisation d'alimentation individuelle.

Le dispositif selon l'invention est particulièrement utile dans le cas fréquent d'une alimentation par un réservoir dont le niveau varie dans des proportions importantes pendant le conditionnement, faisant ainsi varier la pression d'alimentation dans les mêmes proportions.

Dans le cas où l'on utilise une vanne de régulation 16 ou 17, et plus particulièrement dans le cas où l'organe d'alimentation est un réservoir à niveau variable, on peut utilement prévoir de régler l'ouverture initiale dans la vanne de régulation en fonction de la pression statique mesurée en amont de cette vanne et envoyée dans l'unité de traitement pondéral 4 ou dans l'organe de gestion 8, ou leur équivalent dans la machine concernée.

## Revendications

1. Dispositif de remplissage de récipients comportant un organe d'alimentation (1) relié à au moins un bec de remplissage (2) par l'intermédiaire d'un organe de commande d'écoulement (3,16,17) relié à une sortie d'une unité de traitement pondéral (4) ayant une entrée reliée à un organe de pesage (5) afin d'envoyer des signaux d'ouverture ou de fermeture à l'organe de commande d'écoulement en fonction d'un poids mesuré par l'organe de pesage et un organe de mesure de temps (11) associé à l'unité de traitement pondéral pour effectuer au moyen de celle-ci une mesure de poids de produit s'écoulant dans un temps prédéterminé caractérisé en ce que l'unité de traitement pondéral calcule le débit instantané de produit à travers l'organe de commande d'écoulement, compare le débit instantané calculé à une valeur de référence de débit, et ajuste de façon continue le débit de produit en fonction du résultat de la comparaison pour maintenir celui-ci égal au débit de référence.

2. Dispositif de remplissage selon la revendication 1 caractérisé en ce que l'organe de commande d'écoulement comporte un élément de commande (3) associé à chaque bec de remplissage et un élément de régulation (16) commun à plusieurs becs de remplissage.

3. Dispositif de remplissage selon la revendication 2 caractérisé en ce que l'élément de commande (3) associé à chaque bec de remplissage comporte une ouverture de section variable, en ce que l'unité de traitement pondéral (4) associée à chaque bec de remplissage effectue une comparaison individuelle avec une valeur de référence de débit pour chaque bec de remplissage, et en ce que le dispositif comporte un organe de gestion commun (8) pour totaliser les débits calculés de plusieurs becs de remplissage et agir sur l'élément de régulation commun (16).

4. Dispositif de remplissage selon la revendication 1 caractérisé en ce que l'organe de commande d'écoulement (17) associé à chaque bec de remplissage comporte une ouverture de section variable et en ce que le débit de produit est ajusté pour chaque bec de remplissage en agissant sur chaque organe de commande d'écoulement associé.

5. Dispositif de remplissage selon la revendication 4 caractérisé en ce que l'organe de commande d'écoulement (17) est séparé du bec de remplissage par une longueur de canalisation suffisante pour assurer une stabilisation de l'écoulement avant le bec de remplissage (2) et en ce que le bec de remplissage (2) a une ouverture inférieure disposée à un niveau plus élevé que l'organe de commande d'écoulement (17).

6. Dispositif de remplissage selon l'une des revendications 3, 4, ou 5 caractérisé en ce que la valeur de référence de débit de chaque bec de remplissage est variable en fonction d'un degré de remplissage du récipient correspondant.

7. Dispositif de remplissage selon l'une des revendications 1 à 5, caractérisé en ce que l'organe de mesure de temps (11) mesure un temps effectif de remplissage pendant lequel l'organe de commande d'écoulement (3) est ouvert, et en ce que le dispositif comporte des moyens (8) pour comparer le temps effectif de remplissage avec un temps de consigne, et des moyens (9) pour agir en fonction d'une différence entre le temps effectif de remplissage et le temps de consigne afin de maintenir un débit de produit sensiblement constant à travers l'organe de commande d'écoulement (3).

8. Dispositif de remplissage selon la revendication 7 caractérisé en ce qu'il comporte des moyens de comparaison (8) entre le temps effectif de remplissage et un temps critique de remplissage et des moyens pour déclencher une alarme (12) lorsque le temps effectif de remplissage atteint le temps critique de remplissage.

9. Dispositif de remplissage selon la revendication 7 ou la revendication 8 comportant plusieurs becs de remplissage (2), caractérisé en ce qu'il comporte un organe de gestion commun (8) pour effectuer une moyenne des temps effectifs de remplissage correspondant à chacun des becs de remplissage et commander le débit à travers les organes de commande d'écoulement en fonction d'une différence entre la moyenne des temps effectifs de remplissage et le temps de consigne.

10. Dispositif de remplissage selon l'une des revendications 7 à 9 dans lequel l'organe d'alimentation est une cuve d'alimentation (1) à régulation de niveau, caractérisé en ce que les moyens pour maintenir un débit de produit sensiblement constant agissent sur le niveau de produit dans la cuve d'alimentation.

11. Dispositif de remplissage selon la revendication 9 ou la revendication 10 dans lequel les organes de pesage (5) comportent des moyens d'auto-contrôle (13) pour détecter un organe de pesage défaillant, caractérisé en ce que l'organe de gestion (8) est relié aux moyens d'auto-contrôle (13) pour commander l'organe de commande d'écoulement (3) associé à l'organe de pesage défaillant selon une commande temporisée court-circuitant l'unité de traitement pondéral(4) correspondante, la commande temporisée étant effectuée en fonction de la moyenne des temps effectifs de remplissage correspondant aux autres becs de remplissage.

12. Dispositif de remplissage selon la revendication 11 caractérisé en ce que l'organe de gestion (8) comporte des moyens pour mémoriser les temps effectifs de remplissage correspondant à chaque bec de remplissage, et en ce que la commande temporisée d'un bec de remplissage est effectuée en fonction de la moyenne des temps effectifs de remplissage et d'au moins un temps effectif de remplissage correspondant à ce bec de remplissage avant un passage en commande temporisée.

## Patentansprüche

1. Vorrichtung zum Füllen von Behältern umfassend ein Zuführorgan (1), das mit mindestens einem Füllstutzen (2) über ein Ausflußsteuerorgan (3, 16, 17) verbunden ist, welches an einen Ausgang einer Einheit (4) zur Verarbeitung von Gewichtsinformation angeschlossen ist, die einen mit einem Wiegeorgan (5) verbundenen Eingang hat, um Öffnungs- oder Schließsignale an das Ausflußsteuerorgan in Abhängigkeit eines von dem Wiegeorgan gemessenen Gewichtes zu senden, und die ein mit der Einheit zur Verarbeitung von Gewichtsinformation verbundenes Zeitmeßglied (11) hat, um mittels derselben das Gewicht eines in einer vorgegebenen Zeit ausfließenden Produktes zu messen, dadurch gekennzeichnet, daß die Einheit zur Verarbeitung von Gewichtsinformation den momentanen Ausstoß des durch das Ausflußsteuerorgan fließenden Produktes berechnet, den berechneten momentanen Ausstoß mit einem Referenz - Ausstoß vergleicht und den Ausstoß des Produktes kontinuierlich in Abhängigkeit des Vergleichsergebnisses einstellt, um den Ausstoß gleich dem Referenzausstoß zu halten.

2. Vorrichtung nach Anspruch 1, dadurch gekennzeichnet, daß das Ausflußsteuerorgan ein jedem Füllstutzen zugeordnetes Steuerelement (3) und ein Regelelement (16) umfaßt, welches mehreren Füllstutzen gemeinsam zugeordnet ist.

3. Vorrichtung nach Anspruch 2, dadurch gekennzeichnet, daß das jedem Füllstutzen zugeordnete Steuerelement einen variablen Öffnungsquerschnitt hat, daß die jedem Füllstutzen zugeordnete Einheit (4) zur Verarbeitung von Gewichtsinformation einen individuellen Vergleich mit einem Referenzausstoßwert für jeden Füllstutzen ausführt und daß die Vorrichtung ein gemeinsames Steuerorgan (8) zur Aufsummierung der berechneten Ausstoßwerte mehrerer Füllstutzen und zur Beeinflussung des gemeinsamen Regelelementes (16) umfaßt.

4. Vorrichtung nach Anspruch 1, dadurch gekennzeichnet, daß das jedem Füllstutzen zugeordnete Ausflußsteuerorgan (17) eine Öffnung variablen Querschnittes hat und daß der Ausstoß des Produktes für jeden Füllstutzen eingestellt wird, in dem man auf jedes zugeordnete Ausflußsteuerorgan einwirkt.

5. Vorrichtung nach Anspruch 4, dadurch gekennzeichnet, daß das Ausflußsteuerorgan (17) von dem Füllstutzen durch einen Kanal ausreichender Länge getrennt ist, um eine Stabilisierung des Ausflusses vor dem Füllstzutzen (2) zu erreichen, und daß der Füllstutzen (2) eine untere Öffnung hat, die auf einem gegenüber dem Ausflußsteuerorgan (17) höheren Niveau angeordnet ist.

6. Vorrichtung nach einem der Ansprüche 3, 4 oder 5 dadurch gekennzeichnet, daß der Referenzausstoßwert jedes Füllstutzens variabel ist in Abhängigkeit des Füllgrades des entsprechenden Behälters.

7. Vorrichtung nach einem der Ansprüche 1 bis 5, dadurch gekennzeichnet, daß das Zeitmeßorgan (11) eine effektive Füllzeit mißt, während welcher das Ausflußsteuerorgan (3) geöffnet ist, und daß die Vorrichtung Mittel (8) zum Vergleichen der effektiven Füllzeit mit einer vorgegebenen Zeit sowie Mittel (9) umfaßt, um in Abhängigkeit einer Differenz zwischen der effektiven Füllzeit und der vorgegebenen Füllzeit Maßnahmen auszuführen, um den Ausstoß des Produktes durch das Ausflußsteuerorgan (3) im wesentlichen konstant zu halten.

8. Vorrichtung nach Anspruch 7, dadurch gekennzeichnet, daß sie Mittel (8) zum Vergleichen der effektiven Füllzeit mit einer kritischen Füllzeit und Mittel zur Auslösung eines Alarmes (12) umfaßt, wenn die effektive Füllzeit die kritische Füllzeit erreicht.

9. Vorrichtung nach Anspruch 7 oder 8, umfassend mehrere Füllstutzen (2), dadurch gekennzeichnet, daß sie ein gemeinsames Steuerorgan (8) hat, um einen Mittelwert der effektiven Füllzeiten für jeden Füllstutzen zu bilden und den Ausstoß durch die Ausflußsteuerorgane in Abhängigkeit einer Differenz zwischen dem Mittelwert der effektiven Füllzeiten und der vorgegebenen Zeit zu steuern.

10. Vorrichtung nach einem der Ansprüche 7 bis 9, bei welcher das Zuführorgan eine Zuführwanne (1) mit Niveauregelung ist, dadurch gekennzeichnet, daß die Mittel zur Einhaltung eines im wesentlichen konstanten Produktausstoßes auf das Produktniveau in der Zuführwanne einwirken.

11. Vorrichtung nach Anspruch 9 oder 10, bei welcher die Wiegeorgane (5) Selbstüberwachungsmittel (13) zum Erfassen eines fehlerhaften Wiegeorganes haben, dadurch gekennzeichnet, daß die Steuereinrichtung (8) mit den Selbstüberwachungsmittel (13) verbunden ist, um das einem fehlerhaften Wiegeorgan zugeordnete Ausflußsteuerorgan (3) entsprechend einer Zeitsteuerung unter Kurzschließen der entsprechenden Einheit (4) zur Verarbeitung von Gewichtsinformation zu steuern, wobei die Zeitsteuerung in Abhängigkeit des Mittelwertes der effektiven Füllzeiten an den anderen Füllstutzen erfolgt.

12. Vorrichtung nach Anspruch 11, dadurch gekennzeichnet, daß das Steuerorgan (8) Mittel zur Speicherung der effektiven Füllzeiten an jedem Füllstutzen hat und daß die Zeitsteuerung für einen Füllstutzen in Abhängigkeit des Mittelwertes der effektiven Füllzeiten und mindestens einer effektiven Füllzeit an diesem Füllstutzen vor dem Übergang zur Zeitsteuerung erfolgt.

## Claims

1. Filling apparatus for filling receptacles, the apparatus comprising a feed member (1) connected to at least one filling spout (2) via a flow control member (3, 16, 17) connected to an output of a weight processing unit (4) having an input connected to a weighing member (5) in order to deliver opening or closing signals to the flow control member as a function of a weight measured by the weighing member, and a time measuring member (11) associated with the weight processing unit for performing a measure of a weight of product flowing during a predetermined time characterized in that the weight processing unit calculates the instantaneous flow of substance through the flow control member, compares the calculated flow rate with a flow rate reference value, and continuously adjusts the flow rate of the substance as a function of the result of the comparison for maintaining it equal to the reference flow rate.

2. Filling apparatus according to claim 1, characterized in that the flow control member includes a control element (3) associated with each filling spout and a regulator element (16) common to a plurality of filling spouts.

3. Filling apparatus according to claim 2, characterized in that the control element (3) associated with each filling spout includes an opening of variable section, in that the weight processing unit (4) associated with each filling spouts performs an individual comparison for each filling spout with a flow rate reference value, and in that the apparatus includes a common control member (8) for summing the calculated flow rates of a plurality of filling spouts and acting on the common regulator element (16).

4. Filling apparatus according to claim 1, characterized in that the flow control member (17) associated with each filling spout includes a variable section opening and in that the flow rate of substance is adjusted for each filling spout by acting on each associated flow control member.

5. Filling apparatus according to claim 4, characterized in that the flow control member (17) is separated from the filling spout by a sufficient length of duct to ensure that the flow before the filling spout (2) stabilizes, and in that the filling spout (2) has a bottom opening disposed at a higher level than the flow control member (17).

6. Filling apparatus according to any one of claims 3, 4, or 5, characterized in that the flow rate reference value of each filling spout is variable as a function of the degree to which the corresponding receptacle is filled.

7. Filling apparatus according to any one of claims 1 to 5, characterized in that the time measuring member (11) measures an actual filling time during which the flow control member (3) is open, and in that the apparatus includes means (8) for comparing the actual filling time with a reference time, and means (9) for acting as a function of the difference between the actual filling time and the reference time to maintain the flow rate of the substance through the flow control member (3) substantially constant.

8. Filling apparatus according to claim 7, characterized in that it includes comparator means (8) for comparing the actual filling time and a critical filling time, and means for triggering an alarm (12) when the actual filling time reaches the critical filling time.

9. Filling apparatus according to claim 7 or claim 8, including a plurality of filling spouts (2), the apparatus being characterized in that it includes a common control member (8) for taking the average of the actual filling times corresponding to each of the filling spouts and for controlling the flow rate through the flow control members as a function of the difference between the mean of the actual filling times and the reference time.

10. Filling apparatus according to any one of claims 7 to 9, in which the feed member is a regulated depth feed tank (1), the apparatus being characterized in that the means for maintaining a substantially constant flow rate of substance act on the depth of substance in the feed tank.

11. Filling apparatus according to claim 9 or claim 10, in which the weighing members (5) include self-monitoring means (13) for detecting a faulty weighing member, the apparatus being characterized in that the control member (8) is connected to the self-monitoring means (13) in order to control the flow control member (3) associated with a faulty weighing member by timed control short circuiting the corresponding weight processing unit (4), timed control being performed as a function of the mean of the actual filling times corresponding to the other filling spouts.

12. Filling apparatus according to claim 11, characterized in that the control member (8) includes means for storing the actual filling times corresponding to each filling spout, and in that the timed control of a filling spout is performed as a function of the mean of the actual filling times and of at least one actual filling time corresponding to said filling spout prior to switching over to timed control.
